# EUROPÄISCHE PATENTANMELDUNG

(11) **EP 0 726 179 A1**
(43) Veröffentlichungstag der Anmeldung: **14.08.1996**
(21) Anmeldenummer: 96100824.0
(22) Anmeldetag: 20.01.1996
(51) Int. Cl.: B60H 1/00, G05G 5/08, G05G 11/00

(54) **Bediengerät für eine Heizungs- und/oder Klimaanlage**

(30) Priorität: 09.02.1995 DE 19504204
(71) Anmelder: Behr GmbH & Co., D-70469 Stuttgart (DE)
(72) Erfinder: Martin, Ralf, Dipl.-Ing., D-71726 Benningen (DE); Philippin, Erich, D-71272 Renningen (DE); Rode, Andreas, Dipl.-Ing., D-71711 Murr (DE)
(74) Vertreter: Riedel, Peter

(57) **Zusammenfassung**

Das Bediengerät (1) umfaßt mindestens ein Stellelement (14) zum Einstellen der Drehzahl eines Gebläses, ein Stellelement (12) zum Einstellen der Heizleistung, ein Stellelement (11) zum Einstellen einer Luftverteilung sowie ein Stellelement (10) zum Einstellen eines definierten Betriebszustandes der Heizungs- bzw. Klimaanlage. Die Steuerelemente des Bediengerätes (1) sind in einem gemeinsamen Gehäuse (2) gelagert.

Damit bei einfachem Aufbau und billiger Herstellung des Bediengerätes (1) mindestens ein definierter Betriebszustand leicht einstellbar ist, ist das Stellelement (10) für den definierten Betriebszustand mit anderen Stellelementen (11, 12, 14) mechanisch koppelbar, wobei das Stellelement (10) bei Einstellen des definierten Betriebszustandes die betreffenden anderen Stellelemente (11, 12, 14) aus ihrer eingestellten Lage in eine Position verstellt, die dem definierten Betriebszustand entspricht.

Bediengerät für den Einbau in das Armaturenbrett eines Kraftfahrzeuges.

## Beschreibung

Die Erfindung bezieht sich auf ein Bediengerät für eine Heizungs- und/oder Klimaanlage, insbesondere für Kraftfahrzeuge, der im Oberbegriff des Anspruchs 1 angegebenen Gattung.

In dem Aufsatz von Grohmann, Kees, Egle "Klimaautomatik der neuen 7er Baureihe von BMW" in ATZ Automobiltechnische Zeitschrift 90 (1988) Heft 3 ist eine Betätigungseinheit der Klimaautomatik beschrieben. Diese Betätigungseinheit umfaßt mehrere Drucktasten, durch die bestimmte Einstellungen oder Funktionen der Klimaanlage angewählt werden können. Aufgrund der Signale, die durch die Einstellung der Drucktasten an eine elektronische Steuer- und Regeleinheit gegeben werden, übernimmt diese Steuer- und Regeieinheit vollautomatisch die für Fahrer und Beifahrer getrennte Einstellung der Heiz- und Klimaanlage. Dabei wird die Drehzahl des Gebläsemotors entsprechend der am Wählrad eingestellten Luftmenge geregelt und mehrere Schrittmotoren betätigen Luftklappen und Ventile. Ein wesentlicher Vorzug derartiger elektronischer Steuer- und Regeleinheiten besteht darin, daß logische Verknüpfungen zur Einstellung definierter Betriebszustände wie beispielsweise die Scheibendefrostung oder dergleichen problemlos zu realisieren sind. Die bekannte Anlage bietet guten Klimakomfort, der Aufwand hierfür ist jedoch nicht zuletzt im Hinblick auf die Vielzahl der Schrittmotoren und der elektronischen Regelung beträchtlich.

Es ist außerdem aus der DE 34 09 321 A1 eine Klimaanlage mit einer Regeleinrichtung zum Regeln des Innenraumklimas bekannt, bei der nach fest vorgegebenen Regelkennlinien in Abhängigkeit von momentan herrschenden Umweltparametern ein möglichst guter Klimakomfort erreicht werden soll. Um den individuellen Behaglichkeitsvorstellungen des Benutzers gerecht zu werden, umfaßt das Bediengerät Eingabetasten, durch die der Benutzer die eingespeicherten Programme innerhalb bestimmter Grenzen variieren kann. Aufgrund der Fülle der Bedienungselemente ist bei dem bekannten Bediengerät die sachgerechte Bedienung schwierig und außerdem ist eine solche Klimaanlage ähnlich aufwendig und kostenintensiv wie bei dem weiter oben bereits gewürdigten Stand der Technik.

Es ist die Aufgabe der vorliegenden Erfindung, ein Bediengerät der im Oberbegriff des Anspruchs 1 genannten Gattung zu schaffen, das einfach im Aufbau und billig in der Herstellung ist und bei dem darüberhinaus mindestens ein definierter Betriebszustand auf einfachste Weise einstellbar ist.

Diese Aufgabe wird bei einem Bediengerät der gattungsgemäßen Art durch die Merkmale des Anspruchs 1 gelöst.

Die wesentlichen Vorteile des Erfindungsgegenstandes sind darin zu sehen, daß das Bediengerät einfach im Aufbau, billig in der Herstellung und sehr leicht zu handhaben ist. Für einen definierten Betriebszustand ist ein einziges Stellglied zu betätigen, wodurch alle übrigen Stellglieder in die für den definierten Betriebszustand erforderliche Funktion geschaltet werden. Dabei ist das Stellelement für den definierten Betriebszustand mit allen übrigen Stellelementen mechanisch koppelbar, das heißt, zur Einstellung des definierten Betriebszustandes werden alle Stellelemente durch mechanische Kopplung in eine vorbestimmte Position bewegt, wobei in der Gegenrichtung die Kopplung aufgehoben ist bzw. allenfalls dazu dient, das Stellelement für den definierten Betriebszustand in die Ausgangsposition zuzuführen. Letzteres kann jedoch auch durch eine Rückstellfeder erreicht werden.

Obwohl die vorliegende Erfindung auch durch geradlinig verschiebbare Stellelemente realisierbar ist, wird es doch als vorteilhaft angesehen, daß die Stellelemente um eine gemeinsame Achse drehbar gelagert sind und bezogen auf die Drehachse unterschiedliche Radien aufweisen. Dadurch wird erreicht, daß trotz des beschränkten Bauraums für die Stellelemente ein ausreichender Verschiebeweg zur Verfügung steht, wodurch gegebenenfalls ein günstigeres Übersetzungsverhältnis der mechanischen Kraftübertragungsglieder erreicht wird. Für die Stellelemente bestehen verschiedene Ausgestaltungsmöglichkeiten, wobei hierfür vorzugsweise Schwenkhebel, Stellräder und/oder Drehknöpfe in Betracht kommen.

Eine besonders zweckmäßige Ausgestaltung des Bediengerätes besteht darin, daß das Stellelement zum Einstellen des definierten Betriebszustandes den größten Radius aufweist und als Schleppelement wirkender Schwenkhebel ausgebildet ist. Auf diese Weise wird die notwendige Betätigungskraft gering gehalten, da der als Schleppelement wirkende Schwenkhebel aufgrund des großen Radius beim Krafteinleitungspunkt ein ausreichendes Drehmoment zur Betätigung der übrigen Stellelemente erzeugt. Der Schwenkhebel für den definierten Betriebszustand nimmt zwei definierte Endlagen ein, wobei er in die Endlage des definierten Betriebszustandes durch manuelle Betätigung bringbar ist. Um den Schwenkhebel in dieser Enlage des definierten Betriebszustandes zu halten, ist eine Rastvorrichtung vorgesehen, die zweckmäßigerweise einen am Schwenkhebel angeordneten Stift und eine an dem Gehäuse gegen eine Feder verschiebbare Klinke umfaßt. Die Bewegungsrichtung der Klinke verläuft dabei zweckmäßigerweise quer zur Bewegungsbahn des Stiftes. Damit beim Lösen der Rastverbindung der Betätigungshebel in die andere Endlage zurückgeführt wird, ist eine Feder vorgesehen, die den Betätigungshebel in Richtung der anderen Endlage belastet. Diese Feder ist vorzugsweise als Schenkelfeder ausgeführt, wobei ein Schenkel sich entlang des Hebels erstreckt und an diesem befestigt ist und der andere Schenkel an einer Wand des Gehäuses abgestützt ist. Mit diesen einfachen Mitteln ist eine wirksame Rückführung des Betätigungshebels gegeben, wobei die Kraft der Feder nicht sehr groß sein muß, da lediglich die aufgrund der Hebellagerung auftretenden Reibkräfte zu überwinden sind.

Als besonders geeignet wird eine Ausgestaltung des Bediengerätes angesehen, bei dem das Stellelement mit dem kleinsten Radius als Drehknopf und alle anderen Stellelemente als Schwenkhebel ausgebildet sind, die in mehreren Ebenen übereinander angeordnet sind. Da die Bewegungsbahnen der verschiedenen Schwenkhebel bzw. des Drehknopfes in unterschiedlichen Ebenen liegen, wird eine äußerst raumsparende Anordnung erreicht. Dabei sind die Schwenkhebel für die Heizleistung und die Luftverteilung in den Ebenen zwischen dem Drehknopf und dem als Schleppelement wirkenden Schwenkhebel angeordnet. Es kann darüber hinaus zusätzlich ein Stellelement zur Betätigung einer Frischluft/Umluftklappe vorgesehen sein, wobei dieses Stellelement ebenfalls als Schwenkhebel ausgebildet ist, der in zwei definierten Endlagen einstellbar und mittels eines Bowdenzugs oder eines Gestänges mit dieser Klappe verbunden ist. Da die Frischluft/Umluftklappe keine Zwischenstellungen einnimmt, sind zur Betätigung dieser Klappe vergleichsweise geringe Kräfte notwendig, so daß es zweckmäßig erscheint, den betreffenden Schwenkhebel in der nächsten Ebene unter der Ebene des Drehknopfes anzuordnen. Das Stellelement mit dem kleinsten Radius ist zum Einstellen der Drehzahl des Gebläses vorgesehen, wobei dieses Stellelement auf einen veränderbaren elektrischen Widerstand wirkt. Der Widerstand ist vorzugsweise als ein aus einer Kohleschicht bestehendes Potentiometer mit eingebrachten Kontaktbahnen ausgeführt.

Der Drehknopf kann durchaus zum Einstellen einer weiteren Funktion benutzt werden, beispielsweise dadurch, daß er in Richtung der Drehachse in mindestens zwei verschiedenen Ebenen einstellbar ist. Durch das axiale Verschieben des Drehknopfes kann insbesondere ein elektrischer Schalter betätigt werden, wodurch der Drehknopf in den jeweiligen Ebenen verschiedene Schaltzustände bewirkt, die beispielsweise zum Einschalten bzw. Ausschalten der Klimatisierungsfunktion dienen. Um zu verhindern, daß aufgrund mangelnder Luftzufuhr der Verdampfer der Klimaanlage vereist, ist es zweckmäßig, daß der Drehknopf in der die Klimatisierungsfunktion einschaltenden Ebene grundsätzlich eine Position einnimmt, bei der die Drehzahl des Gebläses einer erforderlichen Mindestdrehzahl entspricht, so daß die Drehzahl des Gebläses auf jeden Fall >0 ist. Zur Erfüllung der Schalterfunktion des Drehknopfes in axialer Richtung wird ein Hub von etwa 4 mm zwischen den zwei Ebenen als ausreichend angesehen. Zur verbesserten Handhabung des Drehknopfes besitzt dieser eine asymmetrische Form mit einem radialen Vorsprung, an dessen Mantelfläche Vertiefungen angeformt sind.

Die Schwenkhebel für die Heizleistung und/oder die Luftverteilung sind vorzugsweise stufenlos einstellbar, wobei für deren Endlagen sowie gegebenenfalls bevorzugte Zwischenstellungen Rastungen vorgesehen sind, durch die für die Bedienungsperson auf einfache Weise spürbar ist, wann eine dieser bevorzugten Stellungen erreicht ist und außerdem ein ungewolltes Verstellen des Schwenkhebels aus der eingestellten Position heraus vermieden wird.

Eine besonders zweckmäßige Gestaltung des Gehäuses des Bediengerätes besteht darin, daß dieses im Längsschnitt terrassenförmig ist, wobei jede Stufe der Terrassenform eine Ebene für eines der Stellelemente bildet. Dabei es vorteilhaft, daß das Gehäuse einen orthogonal zur Ebene der Terrassenform angeordneten Zapfen aufweist, an dem die Stellelemente schwenkbar gelagert sind. Dieser Zapfen besitzt eine mehrere Stufen umfassende Mantelfläche, wobei für jeden Schwenkhebel eine Stufe vorgesehen ist. Der Zapfen kann auf einfache Weise dadurch hergestellt sein, daß er einstückig an einer Grundfläche des Gehäuses angeformt ist.

Aufgrund der Gestaltung des Gehäuses des Bediengerätes mit der Terrassenform ist die bevorzugte Einbaulage des Bediengerätes im Armaturenbrett eines Fahrzeugs derart, daß die Drehachse der Stellelemente mindestens annähernd horizontal angeordnet ist. Um auch bei Nacht die Stellelemente und deren relative Lage leicht zu erfassen, sind in den Terrassenstufen beleuchtbare Symbole für unterschiedliche Einstellmöglichkeiten der Stellelemente vorgesehen. Damit nicht jedem Symbol eine eigene Lichtquelle zugeordnet werden muß, sind zu den Symbolen Lichtleitfasern geführt, die von einer gemeinsamen Lichtquelle gespeist werden.

Ein Ausführungsbeispiel des erfindungsgemäßen Bediengerätes ist nachstehend anhand der Zeichnung näher erläutert. In der Zeichnung zeigt:
- Fig.1: die Vorderansicht eines Bediengerätes,
- Fig.2: einen Schnitt entlang der Linie II-II in Fig.2,
- Fig.3: einen Schnitt entlang der Linie III-III in Fig.2,
- Fig.4: das Bediengerät gemäß Fig.1 - teilweise aufgebrochen - in der Stellung des definierten Betriebszustandes,
- Fig.5: einen Schnitt durch die Stellelementelagerung mit einem Schalter,
- Fig.6: die Anordnung der Fig.5 in einer zweiten Funktionsstellung,
- Fig.7: einen Schnitt entlang der Linie VII - VII in Fig.6.

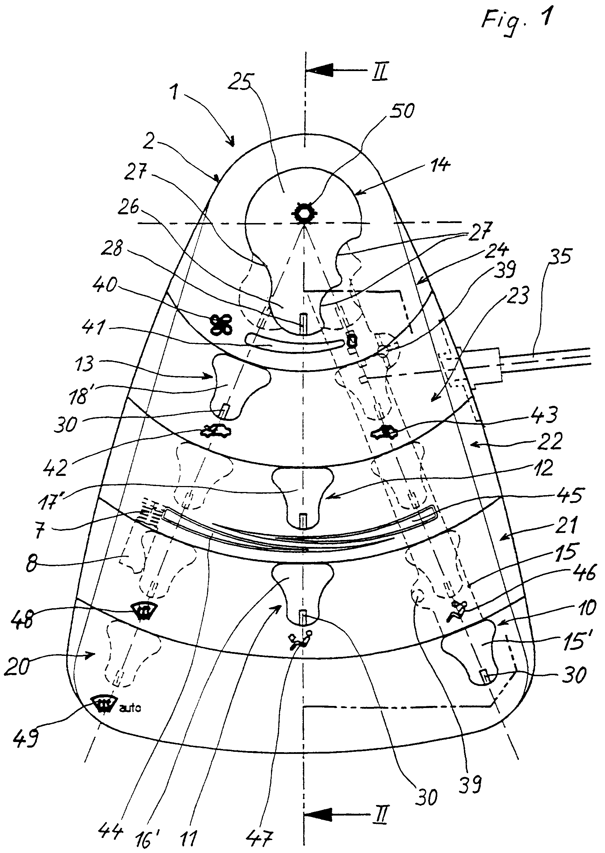

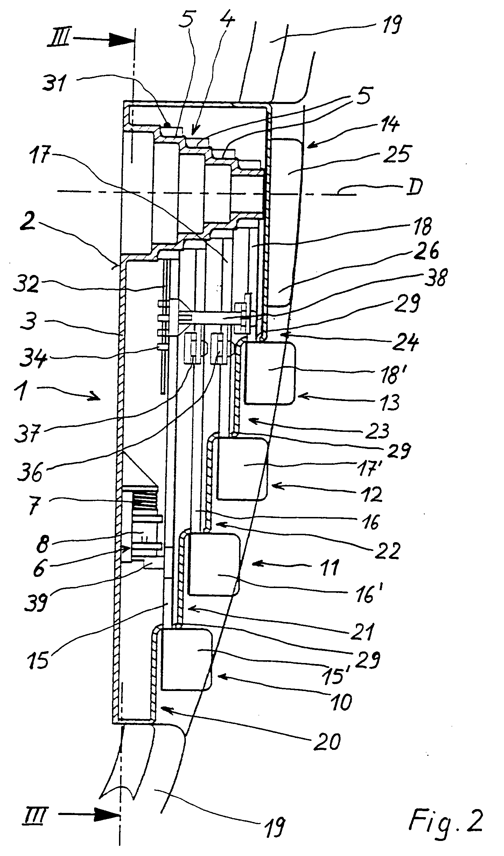

In den Figuren 1 und 2 ist ein Bediengerät 1 dargestellt, das ein Gehäuse 2 mit mehreren Stellelementen 10, 11, 12, 13 und 14 umfaßt. Das Gehäuse 2 ist gemäß Schnittdarstellung in Fig.2 terrassenförmig gestaltet, so daß mehrere Ebenen 20, 21, 22, 23 und 24 gebildet sind. Die Stellelemente 10, 11, 12 und 13 umfassen jeweils einen Schwenkhebel 15, 16, 17 und 18 mit daran befestigtem Griff 15', 16', 17' und 18' und das Stellelement 14 ist als Drehknopf 25 ausgeführt. Alle Stellelemente 10 bis 14 haben eine gemeinsame Schwenk- bzw. Drehachse D. Der Drehknopf 25 befindet sich auf der Ebene 24, er ist asymmetrisch ausgestaltet und besitzt einen radialen Vorsprung 26, der in Richtung auf die übrigen Stellelemente 10 bis 13 weist. Der Vorsprung 26 des Drehknopfes 25 weist an seiner Mantelfläche Vertiefungen 27 auf und an dem vordersten Punkt befindet sich eine Markierung 28, welche die relative Lage des Drehknopfes 25, bezogen auf den maximal möglichen Schwenkwinkel anzeigt. Der Drehknopf 25 ist zur Einstellung der Gebläsedrehzahl vorgesehen, dies ist aus dem Symbol 40 für einen Ventilator ersichtlich, wobei die Drehzahl zwischen 0 und n ₘₐₓ stufenlos einstellbar ist, wie dies das Symbol 41 deutlich macht.

In den Ebenen 20 bis 23 unterhalb der Ebene 24 sind jeweils die Steuerelemente 10 bis 13 angeordnet, deren Schwenkhebel 15 bis 18 durch je einen Schlitz 29 des Gehäuses 2 ragt und deren Griff 15' bis 18' auf dem Ende des jeweiligen Schwenkhebels befestigt ist. Das Gehäuse 2 besitzt eine als Rückwand ausgestaltete Grundfläche 3, an der koaxial zur Drehachse D ein mehrfach abgestufter Zapfen 4 angeformt ist, wobei auf jeder der Stufen 5 einer der Schwenkhebel 15 bis 18 gelagert ist. Die Darstellung in Fig.2 zeigt, daß das Bediengerät 1 derart in ein Armaturenbrett 19 eingebaut ist, daß die Grundfläche 3 des Gehäuses 2 etwa vertikal ausgerichet ist und die Drehachse D etwa horizontal verläuft.

In der Ebene 23 befindet sich das Stellelement 13 zur Betätigung einer in der Zeichnung nicht dargestellten Frischluft/Umluft-Klappe, wie dies aus den entsprechenden Symbolen 42 und 43 ersichtlich ist. Der Schwenkhebel 18 bzw. der Griff 18' ist lediglich in zwei Endstellungen einstellbar, wobei die betreffende Markierung 30 im Griff 18' auf eines der Symbole 42 oder 43 weist. Der Schwenkhebel 18 ist mittels eines Bowdenzugs 35 mit der Frischluft/Umluft-Klappe gekoppelt.

In der nächstfolgenden Ebene 22 befindet sich das Stellelement 12, dessen am Ende des Schwenkhebels 17 angeordneter Griff 17' ebenfalls die Markierung 30 aufweist, durch welche die jeweilige Stellung des Schwenkhebels 17 deutlich erkennbar ist. Die Ebene 22 ist mit zwei Symbolen 44 und 45 versehen, die als jeweils gegensinnig verlaufende bogenförmige Keile gestaltet sind. Diese Symbole 44 und 45 sind für jeweilige Heizleistung vorgesehen, wobei das Symbol 44 der maximalen Heizleistung und das Symbol 45 der Heizleistung 0 und damit 100% Kaltluft entspricht. An dem Hebel 17 ist ein Bowdenzug 36 befestigt, der mit einer Temperatur-Mischluft-Klappe oder einem Ventil des Heizungswärmetauschers zusammenwirkt.

In der nächstfolgenden Ebene 21 befindet sich das Stellelement 11 zur Einstellung einer gewünschten Luftverteilung, was durch die Symbole 46 für Mitteldüsen, 47 für Fußraumdüsen und 48 für Defrosterdüsen deutlich wird. Der Schwenkhebel 16 ist mittels des Griffes 16' in jeder beliebigen Stellung zwischen den Symbolen 46 und 48 einstellbar, wobei vorzugsweise für die Hauptstellungen an den Symbolen 46, 47 und 48 Rasterstellungen vorgesehen sind. Der Schwenkhebel 16 ist mittels eines Bowdenzugs 37 mit - in der Zeichnung nicht dargestellten - Luftverteilerklappen gekoppelt.

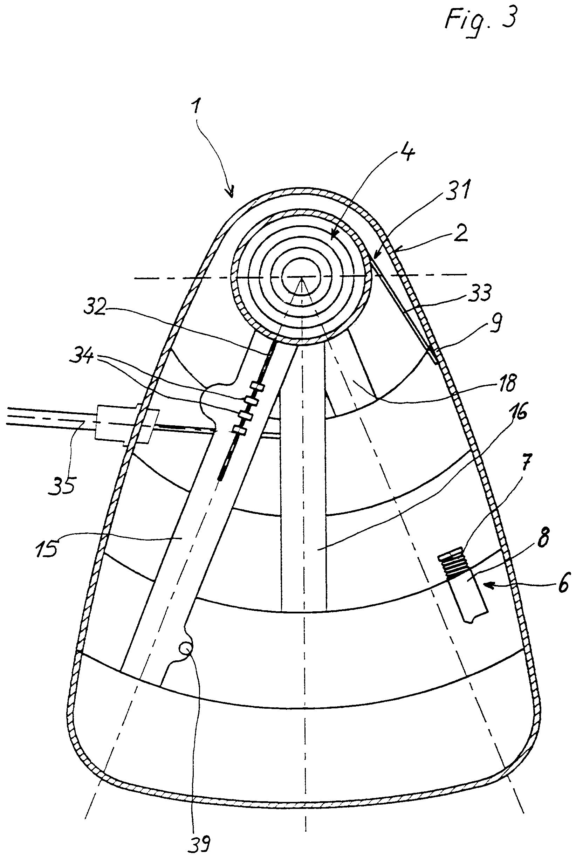

In der untersten Ebene 20 befindet sich das Stellelement 10, das dazu vorgesehen ist, einen definierten Betriebszustand einzustellen. Der Schwenkhebel 15 kann lediglich zwei Endlagen einnehmen, wobei die eine Endlage der Darstellung des Griffes 15' in Fig.1 entspricht und die andere Endlage sich bei dem Symbol 49 befindet. Das Symbol 49 bedeutet "automatische Scheibenentfrostung". Aus den Figuren 2 und 3 wird deutlich, daß eine Schwenkfeder 31 vorgesehen ist, die um das am Zapfen 4 gelagerte Ende des Hebels 15 greift und mit einem seiner Schenkel 32 an dem Schwenkhebel 15 befestigt und mit dem anderen Schenkel 33 an einer Wand 9 des Gehäuses 2 abgestützt ist. Der Schenkel 32 ist von am Schwenkhebel 15 angeformten Haltebügeln 34 umgriffen. Wie aus Fig.1 deutlich wird, sind alle Stellelemente 10 bis 14 über denselben Winkelbereich verstellbar, wobei der Schwenkwinkel in dem Ausführungsbeispiel etwa 45° beträgt.

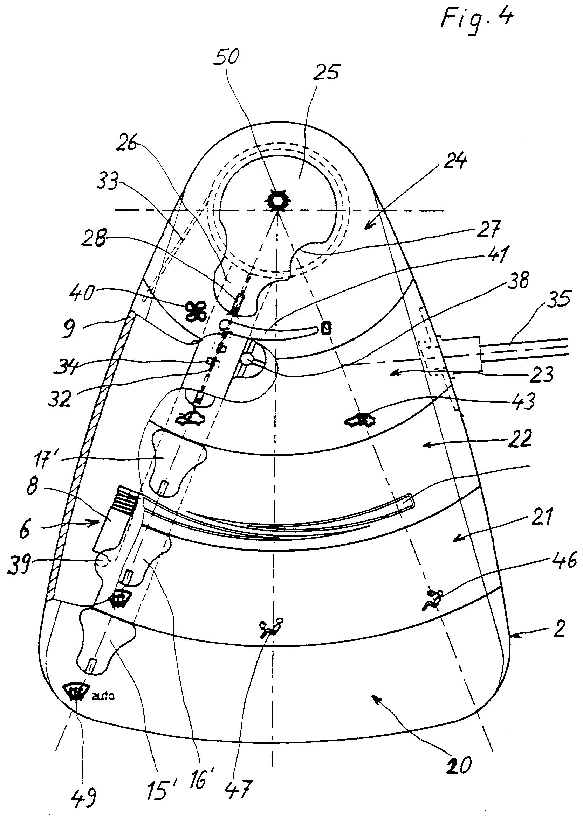

Der Schwenkhebel 15 besitzt einen sich parallel zur Drehachse D erstreckenden Arm 38, der alle weiteren Schwenkhebel 16, 17 und 18 übergreift. Der Arm 38 ist auf der in Fig.1 rechten Seite des Schwenkhebels 15 angeordnet, so daß bei Betätigung des Stellelementes 10 in Richtung auf das Symbol 49 die Stellelemente 11, 12, 13 mitgeschleppt werden, so daß sich die Schwenkhebel 16, 17 und 18 in der linken Stellung befinden, wenn der Griff 15' bzw. dessen Markierung 30 auf das Symbol 49 zeigt. Ebenso wird durch ein in Fig. 1 bis 4 nicht dargestelltes Koppelglied der Drehknopf 25 von dem Schwenkhebel 15 in die Stellung für maximale Lüfterdrehzahl mitgeschleppt. Damit der Schwenkhebel 15 in dieser linken Stellung gehalten wird, ist eine Rastvorrichtung 6 vorgesehen, die einen am Schwenkhebel 15 befestigten Stift 39 und eine am Gehäuse 2 gegen die Kraft einer Feder 7 verschiebbar gelagerte Klinke 8 umfaßt. Die Stellung für das automatische Defrosten der Windschutzscheibe ist in Fig.4 dargestellt.

Aus dieser Stellung für das automatische Defrosten kann der Schwenkhebel 15 mit Hilfe des Griffes 15' oder durch jedes andere Stellelement 11, 12, 13 und 14 herausbewegt werden, wodurch die Klinke 8 gegen die Feder 7 verschoben und somit der Stift 39 entriegelt wird. Die Schenkelfeder 31 sorgt für die selbsttätige Rückstellung des Stellelementes 10 in die in Fig.1 dargestellte Ausgangslage.

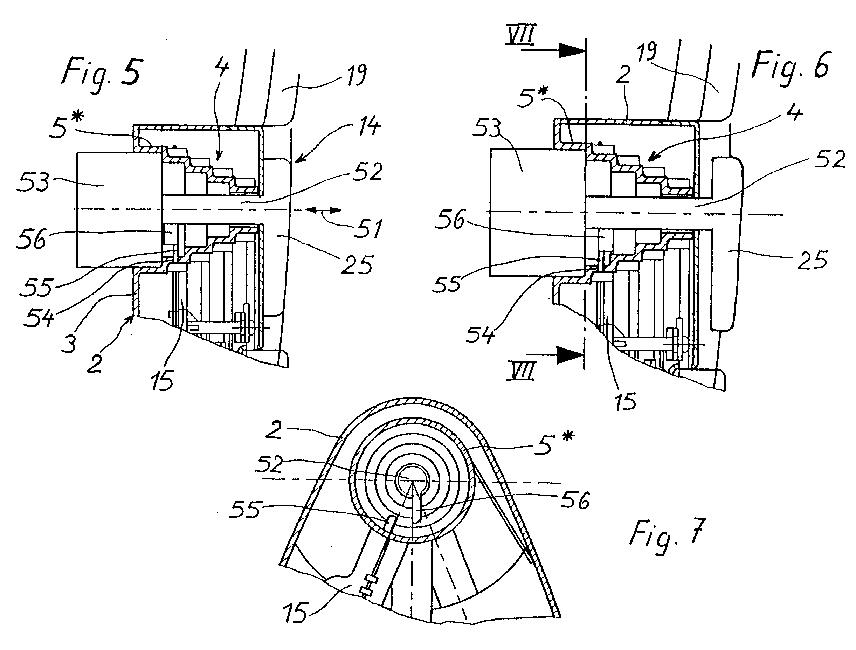

In den Fig. 5 bis 7 ist ein Beispiel für die Anordnung und Betätigung eines Schalters 53 sowie eine Kopplungsanordnung zwischen dem Schwenkhebel 15 und dem Drehknopf 25 gezeigt. In der der Grundfläche 3 benachbarten Stufe 5* des Zapfens 4 ist ein Schalter 53 angeordnet, der eine durch den Zapfen 4 ragende Schalterwelle 52 aufweist, auf deren Ende der Drehknopf 25 befestigt ist. Die unterschiedlichen Schaltzustände sind in Fig. 5 und 6 gezeigt, die durch Betätigung des Stellelementes 14 bzw. des Drehknopfes 25 in Richtung des Pfeiles 51 eingestellt werden können.

Zur Kopplung des Schwenkhebels 15 mit dem Drehknopf ist ein am Schwenkhebel 15 angeordneter Vorsprung 55 vorgesehen, der sich in Längsrichtung des Schwenkhebels 15 durch einen Schlitz 54 in der den Schwenkhebel 15 lagernden Stufe 5 des Zapfens 4 in dessen Hohlraum erstreckt. Das Ende des Vorsprungs 55 ragt dabei in die Bewegungsbahn eines an der Schalterwelle 52 angeordneten Mitnehmers 56, so daß bei Betätigung des Stellelementes 10 in den definierten Betriebszustand gemäß Fig. 4 der Vorsprung 55 den Mitnehmer 56 und den damit verbundenen Drehknopf 25 in die Stellung für maximale Drehzahl mitschleppt.

Der Drehknopf 25 ist in axialer Richtung in zwei Ebenen einstellbar, wobei der Hub zwischen beiden Ebenen vorzugsweise 4 mm beträgt. Der Drehknopf 25 wirkt auf den Schalter 53, durch den die Klimatisierungsfunktion ein- bzw. ausgeschaltet werden kann. Um auf die Funktion als Bedienelement des Schalters für die Klimaanlage hinzuweisen, ist in dem Drehknopf 25 ein Symbol 50 in Form eines Eiskristalls vorgesehen, wobei durch eine Leuchtdiode innerhalb des Symbols 50 der jeweilige Schalterzustand angezeigt wird. Die Bediengeräte 1 können somit für Heizungsanlagen und Klimaanlagen grundsätzlich gleich gestaltet und ausgeführt sein, der Unterschied besteht lediglich darin, daß der Drehknopf 25 axial einen Hub ausführt und mit einem elektrischen Schalter 53 gekoppelt ist. Zwischen dem Drehknopf 25 und dem Teil des Gehäuses 2, der die Ebene 24 begrenzt, sind vorzugsweise Mittel vorgesehen, durch die der Drehknopf bei Einschalten der Klimatisierungsfunktion eine Stellung einnehmen muß, die einer bestimmten Mindestdrehzahl des Gebläses entspricht und somit auf jeden Fall >0 ist. Auf diese Weise wird einem Vereisen des Verdampfers der Klimaanlage entgegengewirkt.

## Patentansprüche

1. Bediengerät (1) für eine Heizungs- und/oder Klimaanlage, insbesondere für Kraftfahrzeuge, das mindestens ein Stellelement (14) zum Einstellen der Drehzahl eines Gebläses, ein Stellelement (12) zum Einstellen der Heizleistung, ein Stellelement (11) zum Einstellen einer Luftverteilung sowie ein Stellelement (10) zum Einstellen eines definierten Betriebszustandes der Heizungs- und/oder Klimaanlage umfaßt, wobei die Stellelemente (10, 11, 12, 14) in einem gemeinsamen Gehäuse (2) gelagert sind,
dadurch gekennzeichnet, daß das Stellelement (10) für den definierten Betriebszustand mit mindestens einem der anderen Stellelemente (11, 12, 14) mechanisch koppelbar ist, wobei das Stellelement (10) bei Einstellen des definierten Betriebszustandes die betreffenden Stellelemente (11, 12, 14) aus ihrer eingestellten Lage in eine Position verstellt, die dem definierten Betriebszustand entspricht.

2. Bediengerät nach Anspruch 1,
dadurch gekennzeichnet, daß das Stellelement (10) für den definierten Betriebszustand mit allen übrigen Stellelementen (11, 12, 14) mechanisch koppelbar ist.

3. Bediengerät nach Anspruch 1 oder 2, dadurch gekennzeichnet, daß die Stellelemente (10, 11, 12, 14) um eine gemeinsame Achse drehbar gelagert sind und bezogen auf die Drehachse (D) unterschiedliche Radien aufweisen, wobei vorzugsweise die Stellelemente (10, 11, 12, 14) als Schwenkhebel, Stellräder und/oder Drehknöpfe ausgebildet sind.

4. Bediengerät nach einem der vorhergehenden Ansprüche,
dadurch gekennzeichnet, daß das Stellelement (10) zum Einstellen des definierten Betriebszustandes den größten Radius aufweist und als Schleppelement wirkender Schwenkhebel (15) ausgebildet ist.

5. Bediengerät nach Anspruch 4,
dadurch gekennzeichnet, daß der Schwenkhebel (15) zwei definierte Endlagen einnimmt und in die Endlage des definierten Betriebszustandes durch manuelle Betätigung bringbar ist, wobei vorzugsweise der Schwenkhebel (15) in der Endlage des definierten Betriebszustandes mittels einer Rastervorrichtung (6) gehalten ist, welche insbesondere einen an dem Schwenkhebel (15) angeordneten Stift (39) und eine an dem Gehäuse (2) gegen eine Feder (7) verschiebbare Klinke (8) umfaßt.

6. Bediengerät nach Anspruch 5,
dadurch gekennzeichnet, daß eine den Betätigungshebel (15) in Richtung der anderen Endlage belastende Feder (31) vorgesehen ist, die vorzugsweise als Schenkelfeder ausgeführt ist, wobei ein Schenkel (32) sich entlang des Hebels (15) erstreckt und an diesem befestigt ist und der andere Schenkel (33) an einer Wand (9) des Gehäuses (2) abgestützt ist.

7. Bediengerät nach einem der Ansprüche 3 bis 6,
dadurch gekennzeichnet, daß das Stellelement (14) mit dem kleinsten Radius als Drehknopf (25) und alle anderen Stellelemente (10, 11, 12) als Schwenkhebel (15, 16, 17) ausgebildet und in mehreren Ebenen (20, 21, 22, 24) übereinander angeordnet sind, wobei vorzugsweise der Drehknopf (25) eine asymmetrische Form mit einem radialen Vorsprung (26) besitzt, an dessen Mantelfläche Vertiefungen (27) angeformt sind.

8. Bediengerät nach Anspruch 7,
dadurch gekennzeichnet, daß in den Ebenen (21, 22) zwischen dem Drehknopf (25) und dem als Schleppelement wirkenden Schwenkhebel (15) die Schwenkhebel (16, 17) für die Heizleistung und die Luftverteilung sowie ein Stellelement (13) zur Betätigung einer Frischluft/Umluft-Klappe angeordnet sind, wobei vorzugsweise die Schwenkhebel (16, 17) für die Heizleistung und/oder die Luftverteilung stufenlos einstellbar sind und für deren Endlagen sowie gegebenenfalls bevorzugte Zwischenstellungen Rastungen vorgesehen sind.

9. Bediengerät nach Anspruch 8,
dadurch gekennzeichnet, daß das Stellelement (13) für die Frischluft/Umluft-Klappe als Schwenkhebel (18) ausgebildet ist, der in zwei definierten Endlagen einstellbar und mittels eines Bowdenzugs (35) oder eines Gestänges mit dieser Klappe verbunden ist, wobei der Schwenkhebel (18) in der nächsten Ebene (23) unter der Ebene (24) des Drehknopfes (25) angeordnet ist.

10. Bediengerät nach einem der Ansprüche 3 bis 9,
dadurch gekennzeichnet, daß das Stellelement (14) mit dem kleinsten Radius zum Einstellen der Drehzahl des Gebläses vorgesehen ist und auf einen veränderbaren elektrischen Widerstand wirkt, wobei der Widerstand vorzugsweise als ein aus einer Kohleschicht bestehendes Potentiometer mit eingebrachten Kontaktbahnen ausgeführt ist.

11. Bediengerät nach einem der Ansprüche 7 bis 10,
dadurch gekennzeichnet, daß der Drehknopf (25) mit einer Welle (52) eines Schalters (53) verbunden und in Richtung der Drehachse (D) in mindestens zwei verschiedenen Ebenen einstellbar ist, wobei der Hub zwischen den zwei Ebenen etwa 4 mm beträgt und der Drehknopf (25) in den Ebenen verschiedene Schaltzustände des Schalters (53) bewirkt und zum Einschalten bzw. Ausschalten der Klimatisierungsfunktion dient und vorzugsweise an der Schalterwelle (52) ein Mitnehmer (56) angeordnet ist, in dessen Bewegungsbahn ein am Schwenkhebel (15) vorgesehener Vorsprung (54) ragt und der Drehknopf (25) in der die Klimatisierungsfunktion einschaltenden Ebene grundsätzlich eine Position einnimmt, bei der die Drehzahl des Gebläses >0 ist.

12. Bediengerät nach einem der Ansprüche 3 bis 11,
dadurch gekennzeichnet, daß das Gehäuse (2) im Längsschnitt terrassenförmig gestaltet ist, wobei jede Stufe der Terrassenform eine Ebene (20 bis 24) für eines der Stellelemente (10 bis 14) bildet und vorzugsweise das Gehäuse (2) einen orthogonal zur Ebene der Terrassenform angeordneten Zapfen (4) aufweist, an dem die Stellelemente (10 bis 13) schwenkbar gelagert sind und der Zapfen (4) eine mehrere Stufen (5) umfassende Mantelfläche besitzt, wobei für jeden Schwenkhebel (10 bis 13) eine Stufe (5) vorgesehen ist und der Zapfen (4) einstückig an einer Grundfläche (3) des Gehäuses (2) angeformt ist sowie eine der Grundfläche (3) des Gehäuses (2) benachbarte Stufe (5*) aufweist, in der der Schalter (53) aufgenommen ist.

13. Bediengerät nach einem der Ansprüche 3 bis 12,
dadurch gekennzeichnet, daß die Drehachse (D) des im Armaturenbrett (19) des Fahrzeugs eingebauten Bediengerätes (1) mindestens annähernd horizontal angeordnet ist.

14. Bediengerät nach Anspruch 12,
dadurch gekennzeichnet, daß in den Terrassenstufen beleuchtbare Symbole (40 bis 49) für unterschiedliche Einstellmöglichkeiten der Stellelemente (10 bis 14) vorgesehen sind, wobei vorzugsweise zu den Symbolen (40 bis 49) Lichtleitfasern geführt sind, die von einer gemeinsamen Lichtquelle gespeist werden.

15. Bediengerät nach einem der Ansprüche 4 bis 14,
dadurch gekennzeichnet, daß der Schwenkwinkel der Schwenkhebel (15 bis 18) bzw. des Drehknopfes (25) mindestens 40° und höchstens 70°, vorzugsweise 45° bis 50° beträgt.

16. Bediengerät nach einem der Ansprüche 4 bis 15,
dadurch gekennzeichnet, daß an dem Schwenkhebel (15) ein sich parallel zur Drehachse (D) erstreckender Arm (39) angeordnet ist, der alle übrigen Schwenkhebel (16, 17, 18) übergreift.
